(19) Europäisches Patentamt
European Patent Office
Office européen des brevets

(11) **EP 4 498 295 A1**

(12) **EUROPEAN PATENT APPLICATION**

(43) Date of publication:
**29.01.2025 Bulletin 2025/05**

(21) Application number: **24189835.2**

(22) Date of filing: **19.07.2024**

(51) International Patent Classification (IPC):
**G06N 10/40** (2022.01)

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 US 202318225837**

(71) Applicants:
• **Forschungszentrum Jülich GmbH**
  **52428 Jülich (DE)**
• **Syracuse University**
  **Syracuse, NY 13244 (US)**

(72) Inventors:
• **Ansari, Mohammad**
  **52074 Aachen (DE)**
• **Schlabes, Arne**
  **52070 Aachen (DE)**
• **Xu, Xuexin**
  **52428 Jülich (DE)**
• **Plourde, Britton**
  **Jamesville, 13078 (US)**
• **Mc Broom, Tianna**
  **Syracuse, 13210 (US)**

(74) Representative: **Leinweber & Zimmermann**
**Patentanwalts-PartG mbB**
**European Patent Attorneys**
**Viktualienmarkt 8**
**80331 München (DE)**

(54) **QUANTUM DEVICES WITH LEFT-HANDED RING RESONATORS**

(57) A quantum device, *i.e.,* a two-qubit entangling gate, and a related method, are presented. The quantum device includes a first qubit, a second qubit, and a ring resonator with left-handed wave dispersion. The ring resonator is coupled to the first and second qubits. In one embodiment, a quantum device includes a plurality of qubits and a ring resonator with left-handed wave dispersion. The plurality of qubits may include 2, 3, 4, 5 or more qubits positioned around the ring resonator. The ring resonator is coupled to a first pair of the qubits, e.g., a first and second qubit. In such a case, the ring resonator has a dense multi-mode spectrum near the qubit frequencies, allowing for large variations in the interaction strength between the qubits. Such a configuration enables a two-qubit entangling gate that entangles the coupled pair of qubits.

FIG. 1-1

**FIG. 1-2**

## Description

### CROSS REFERENCE TO RELATED APPLICATIONS

This application is a non-provisional application filed under relevant portions of 35 U.S.C. § 111 and 37 CFR § 1.53.

### STATEMENT REGARDING FEDERALLY SPONSORED RESEARCH OR DEVELOPMENT

This invention is related to federally sponsored research and development under AFRL contracts number FA8750-20-1-1001 and AFOSR - FA9550-21-1-0020. The invention was made with U.S. government support. The U.S. government has certain rights in the invention.

### BRIEF SUMMARY

In one embodiment, a quantum device, *i.e.*, a two-qubit entangling gate is presented. The quantum device includes a first qubit, a second qubit, and a ring resonator with left-handed wave dispersion. The ring resonator is coupled to the first and second qubits.

In another embodiment, the plurality of qubits includes at least a third qubit, and the ring resonator is alternately coupled to a first pair of the plurality of qubits comprising the first and second qubits and a second pair of the plurality of qubits comprising the first and third qubits. The first pair of qubits comprise nearest neighbors and the second pair of qubits comprise non-nearest neighbors.

The above embodiments are exemplary only. Other embodiments as described herein are within the scope of the disclosed subject matter.

### BRIEF DESCRIPTION OF THE SEVERAL VIEWS OF THE DRAWINGS

So that the manner in which the features of the disclosure can be understood, a detailed description may be had by reference to certain embodiments, some of which are illustrated in the accompanying drawings. It is to be noted, however, that the drawings illustrate only certain embodiments and are therefore not to be considered limiting of its scope, for the scope of the disclosed subject matter encompasses other embodiments as well. The drawings are not necessarily to scale, emphasis generally being placed upon illustrating the features of certain embodiments. In the drawings, like numerals are used to indicate like parts throughout the various views, in which:

FIGS. 1-1 and 1-2 depict and characterize exemplary ring resonators, in accordance with one or more aspects set forth herein;
FIG. 2 depicts a 24-cell left-handed superconducting metamaterial ring-resonator, in accordance with one or more aspects set forth herein;
FIG. 3 depicts the mode structure of the resonator, in accordance with one or more aspects set forth herein;
FIG. 4 depicts qubit spectroscopy, in accordance with one or more aspects set forth herein; and
FIG. 5 depicts ZZ measurements, in accordance with one or more aspects set forth herein.

Corresponding reference characters indicate corresponding parts throughout several views. The examples set out herein illustrate several embodiments, but should not be construed as limiting in scope in any manner.

### DETAILED DESCRIPTION

Generally stated, the present disclosure relates to a two-qubit entangling gate. As discussed below, the inventors have discovered that a two-qubit entangling gate can be implemented using a superconducting ring resonator with left-handed wave dispersion. For example, a two-qubit entangling gate can be based on tunability of the ZZ interaction between two qubits via a left-handed multimode metamaterial ring resonator.

In one embodiment, a quantum device includes a plurality of qubits and a ring resonator with left-handed wave dispersion. The plurality of qubits may include 2, 3, 4, 5 or more qubits positioned around the ring resonator. The ring resonator is coupled to a first pair of the qubits, *e.g.*, a first and second qubit. Such a configuration allows the quantum device to be a two-qubit entangling gate that entangles the coupled pair of qubits.

Because of the unique structure of the quantum device, after selecting a large value for the ZZ interaction and entangling the first pair of qubits, the ZZ interaction may be reduced for the first pair, and a different pair of qubits may be entangled without impacting the first pair of qubits. Analogously, it is believed that numerous pairs of qubits may be operated upon by the quantum device in a sequential manner.

For instance, in another embodiment, the plurality of qubits includes at least a third qubit, and the ring resonator is alternately coupled to a first pair of the plurality of qubits comprising the first and second qubits and a second pair of the plurality of qubits comprising the first and third qubits. The first pair of qubits comprise nearest neighbors and the second pair of qubits comprise non-nearest neighbors.

In one implementation, the plurality of qubits are evenly spaced about the ring resonator. In another implementation, the plurality of qubits are not evenly spaced about the ring resonator. In such a case, the first and second qubits are coupled at different points around the ring resonator.

In a specific example, the ring resonator comprises a plurality of unit cells arranged in a ring, and the first qubit and the second qubit are coupled at different points on the ring separated by at least one unit cell.

The claimed invention is not limited to any specific type of qubits, and the technique, which is described in detail with respect to transmon qubits is believed to be applicable to other types of qubits, such as flux onium qubits. Advantageously, the ring resonator comprises a spectrum of modes in the vicinity of transition frequencies of the first and second qubits. For instance, the frequency of the first qubit is fixed and the frequency of the second qubit is tuned.

By way of example, the coupling between the first and second qubits may be turned on or off by tuning the ZZ-interaction. For convenience, the term coupling is used to indicate that the ZZ interaction is turned on or off. For example, in another example, the coupling between the first and second qubits is varied between zero and 50 MHz. The ring resonator may comprise a superconducting metamaterial. And the first and second qubits are coupled by a range g-coupling strengths to each of the ring resonator modes.

Advantageously, mediating a two-qubit entangling gate by a superconducting ring resonator with left-handed wave dispersion shows distinctive features that make it different from standard single-mode couplers. For instance, left-handed metamaterial resonators contain many frequency modes that are distributed non-harmonically in the microwave frequency domain. Thus qubits coupled to several modes, instead of one, can combine different interaction strengths so that their net interaction via the resonator can vary from zero to an extremely large value. More specifically, the multiple modes do not necessarily make the highest possible interaction strength larger than for a single-mode resonator, but they allow for a much larger range of interaction strengths than for a single-mode resonator because the shift in qubit frequency required to change the interaction strength by a large amount can be much smaller than for a single-mode resonator. As shown herein, the strong coupling strength mediated by a metamaterial ring resonator can be used to introduce a superfast quantum gate between two qubits.

As another advantage, when used in the fields of quantum computing and quantum simulation of complex systems the present techniques can make the computation faster so that the two-qubit entangling gates have a higher fidelity. In addition, this technique can potentially be useful in metrology, in quantum sensing, and in quantum acoustic devices, where fast, high-fidelity generation of entanglement between qubits can be beneficial.

Disadvantageously, some conventional two-qubit gates are based on bus resonators that contain a single-mode right-handed bus resonator coupled to both qubits, leading to an upper limit in its coupling strength. Two-qubit gates may also involve direct coupling between the qubits, and use a tunable coupling element between the qubits. Superconducting metamaterials have been coupled previously to single transmons and shown to permit relatively fast single-qubit gate control. In the present disclosure, the qubit state has been read out through a separate resonator. In a novel application, superconducting left-handed metamaterial resonators are used to couple two qubits for implementing two-qubit entangling gates.

As another disadvantage of conventional techniques, conventional two-qubit gates provide an intermediate coupling strength between the qubits, as compared to the results of the present technique in which the small range of tuning of the qubit frequency allows a large change in coupling strength. In addition, the present techniques can enable operation of a large-scale quantum processor and allow multiple qubits arranged around a ring such that multiple different pairs may be used in a two-qubit gate. Given that the qubit coherence time is limited in conventional approaches, practically only a relatively small number of two-qubit gates can be applied on a multi-qubit state within the constraints of the device coherence.

By way of explanation, left-handed metamaterial resonators have the following features : 1) the low-frequency domain is packed with many modes that are non-harmonically separated from each other by a dispersion relation that scales roughly inversely with wavenumber above an infrared cut-off frequency, 2) qubit frequencies can be arbitrarily adjusted in between gaps in the metamaterial modes so that by combining all coupling strengths between qubits and modes, diverse possibilities for the net qubit-qubit ZZ interaction strength can be provided, 3) going from a zero qubit-qubit ZZ interaction to a strong qubit-qubit ZZ interaction regime and back can take place quickly by a small adjustment of one or both qubit frequencies. All of these features together provide a new possibility to define a two-qubit entangling gate based on this tunability of the ZZ interaction between two qubits via a left-handed multimode metamaterial ring resonator.

A number of unit cells in the left-handed metamaterial ring resonator are needed. The more cells in the ring resonator, the more modes are present in the system. Each cell contains a series capacitance with an inductance to ground. Any two arbitrarily chosen cells can be each capacitively coupled to one of the two qubits. Depending on how many unit cells the two qubits are apart from one another and the mode multiplicity and crowding at low frequencies, selectively different interaction strengths between the two qubits can be realized. The qubit-qubit net interaction can largely vary by tuning qubit frequency over a rather small tuning range of a few tens of MHz. This is in contrast to other two-qubit gate approaches based on tunable ZZ interactions with conventional circuit elements that typically require qubit frequency tuning of more than one GHz. Alternatively, for fixed frequency qubits, making the left-handed resonating modes tunable, allows for the possibility of changing the net qubit-qubit ZZ interaction strength. Tuning of modes can take place in various ways, for instance, by arranging for the inductors in one or a few key unit cells to be flux-tunable.

By way of further explanation, in the field of circuit quantum electrodynamics (cQED), linear resonators are commonly used for readout of artificial atom qubits, and in some cases, for coupling between qubits. Variants on this architecture are the dominant paradigm for current superconductor-based quantum processors. The resonators are often formed from planar transmission lines with a single mode near the frequency range of the qubits, resulting in physically large footprints of several mm. Utilizing an even larger physical footprint, devices with dense mode spectra near the qubit frequency range have been realized using ultra-long linear resonators. Similar multimode cQED systems have been studied for implementing quantum memories and quantum simulations.

The use of metamaterials formed from lumped-element inductors and capacitors allows for the implementation of transmission lines with unconventional wave dispersion. In the case of left-handed dispersion, the wave frequency is a falling function of wavenumber above an infrared cutoff frequency fir, below which waves are unable to propagate. In the context of cQED, left-handed metamaterials produce a dense spectrum of orthogonal microwave modes above $f_{IR}$, which can be engineered to fall in the frequency range of conventional superconducting qubits.

Ring resonators have been used in integrated photonics systems to form compact optical resonances, or whispering gallery modes, for a broad range of applications including microwave-optical transducers, microwave frequency combs, and multimode nonlinear optics. Superconducting transmission lines ring resonators have been used in cQED applications resulting in novel in boundary conditions, but require a large footprint to ensure a minimum of one wavelength matches the circumference. Described herein is a superconducting ring resonator formed from a left-handed metamaterial transmission line with two transmon qubits coupled at different points around the ring. The left-handed dispersion results in a dense spectrum of modes in the vicinity of the transition frequencies for the qubits, with a relatively compact footprint for the ring resonator. We perform a detailed modeling of the standing-wave structure and degeneracy breaking in the ring resonator, allowing us to predict the coupling energy scales between the qubits and each ring resonator mode. The multimode coupling between the qubits with the ring resonator serving as a bus results in significant variations in both the transverse exchange coupling between the qubits as well as higher order ZZ interactions as the qubits are tuned between different frequency regimes.

Our theoretical modeling of these interactions is in close agreement with our experimental measurements. The ability to modulate the ZZ interaction strength between zero and a large value for a small change in qubit frequency allows for the possibility of implementing fast, high-fidelity entangling gates between pairs of qubits located around the ring resonator.

A resonator formed from a conventional transmission line (TL) can be modeled as an array of LC unit cells, each with inductors shunted by capacitors to ground. For this discrete model, a linear TL of length $d_1$ is partitioned into N unit cells, each with size $\Delta x = d_1/N$. The cell capacitance (inductance) are $C_L = c_L \Delta x$ ($L_L = l_L \Delta x$) with $c_L$ ($l_L$) being the respective quantities per unit length. In the continuum limit $N \to \infty$, the lumped-element model reproduces the linear dispersion of transverse electromagnetic modes $\omega(k) = k/\sqrt{c_L l_L}$, with $k$ being wave number. This configuration results in a right-handed resonator, as its wave, electric and magnetic vectors make a right-handed set in three dimensions. However, switching the positions of the capacitors and inductors results in a left-handed dispersion relation, with ω decreasing for increasing k:

$$\omega(k) = \frac{1}{2\sqrt{L_L C_L}} \frac{1}{\sin(|k|\Delta x/2)}. \qquad (1)$$

In an ideal left-handed metamaterial, varying wave number in the domain of $|k\Delta x| \leq \pi$ shows no upper bound on frequency in the $k \to 0$ limit. In actual devices, a finite upper bound is expected because these modes hybridize with parasitic right-handed modes. Additionally, left-handed metamaterials exhibit a lower bound at $|k\Delta x| \to \pi$, referred to as the infrared cutoff frequency $\omega_{IR} = 1/2\sqrt{C_L L_L}$, which is only slightly perturbed with parasitic modes. In between the upper and lower frequency bounds there are a finite number of modes, with those close to the infrared cutoff being densely grouped, and mode separation increasing monotonically with higher frequencies.

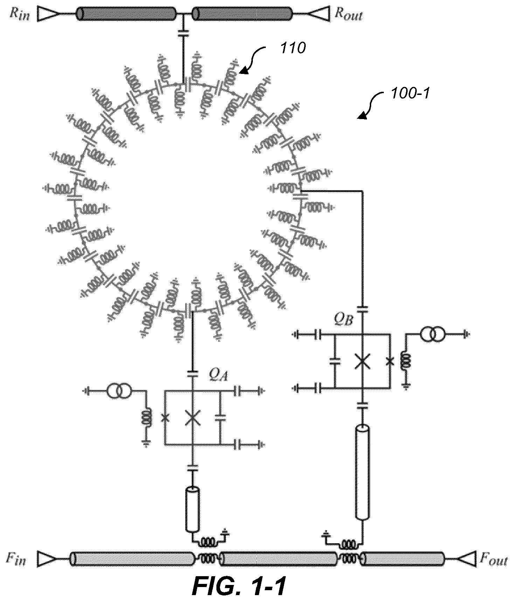

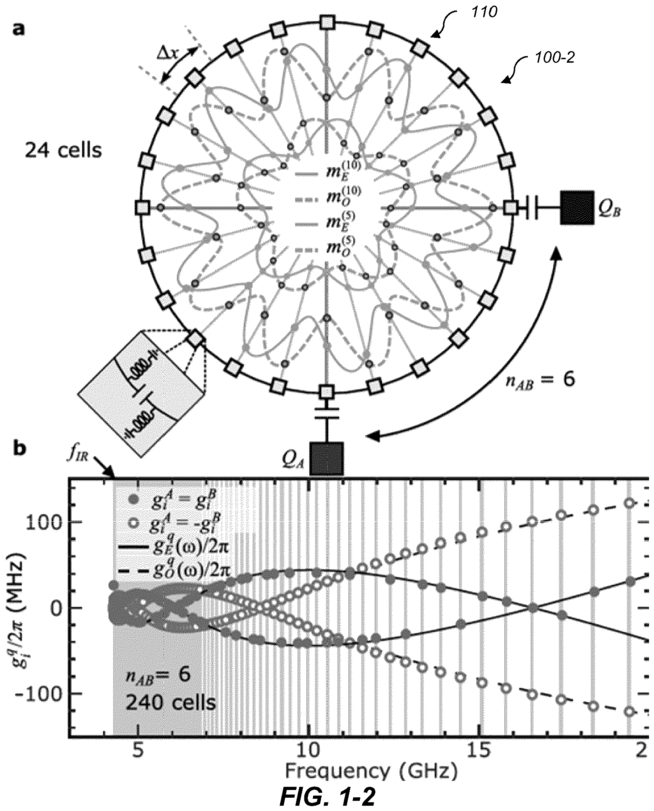

Next, we consider a left-handed ring resonator design made by connecting the two ends of a left-handed linear TL. This enforces periodic boundary conditions, similar to Born-von Karman boundary conditions in solid state physics. This condition highlights two types of traveling waves in the ring resonator: clockwise and counterclockwise moving waves. Given that the dispersion relation (1) depends on $|k|$, not $k$, waves moving in opposite directions have the same frequency. In a perfect ring with identical cells and no external coupling, equal combinations of clockwise $|k\rangle$ and counterclockwise $|-k\rangle$ waves define the standing wave of frequency $\omega(k)$, with even and odd parity $|E\rangle = (|k\rangle + |-k\rangle)/\sqrt{2}$ and $|O\rangle = (|k\rangle - |-k\rangle)/\sqrt{2}$, respectively. The parity is indistinguishable at $k = 0$. Similarly, for the mode at the IR cutoff, the difference between the clockwise and counterclockwise argument $k\Delta x$ is $2\pi$, thus the two parities are indistinguishable. This is akin to states at the edge of the Brillouin zone in solid state systems. A total of N/2 - 1 degenerate parity pairs can be found in an ideal ring resonator. Figure 1-2(a) shows two pairs of such degenerate modes in the form of standing waves with a relative phase shift of π/2. In the subsequent sections, we will show that any source of asymmetry between cells of local external coupling to the ring lifts the degeneracy.

Let us now consider a ring resonator that is capacitively coupled to two weakly-anharmonic qubits, $Q_A$ and $Q_B$, separated by $n_{AB}$ cells around the ring, shown in Fig. 1-2(a). Using the standard circuit quantization within the rotating wave approximation, the total Hamiltonian reads

$$H/h = \sum_q \left[ \omega_q \hat{a}_q^\dagger \hat{a}_q + \frac{\delta_q}{2} \hat{a}_q^\dagger \hat{a}_q (\hat{a}_q^\dagger \hat{a}_q - 1) \right] + \sum_{|k|,P} \omega(k) \hat{r}_{k,P}^\dagger \hat{r}_{k,P} + \sum_{|k|,P,q} g_P^q(k)(\hat{r}_{k,P}^\dagger \hat{a}_q + \hat{r}_{k,P} \hat{a}_q^\dagger),$$

$$(2)$$

with $\hat{a}_q^\dagger (\hat{a}_q)$ being the creation (annihilation) operator of qubit $q$ = A, B and $\delta_q$ being the qubit anharmonicity, that depends on qubit frequency. Here $\hat{r}_{k,P}^\dagger$ ($\hat{r}_{k,P}$) are the creation (annihilation) operator of ring resonator mode $k$ and parity P = E, O and the qubit-resonator mode coupling strengths $g_P^q(k)$ are each proportional to the amplitude of the standing wave for the particular mode at the qubit location, as shown in Fig. 1-1(a), and therefore depend on k and parity P. The even- and odd-parity coupling strengths can be expressed as:

$$g_E^B(k) = g_E^A(k) \propto \frac{\omega^{\frac{3}{2}}(k)}{\sqrt{N}} \cos\left(k\frac{x_{AB}}{2}\right) \qquad (3)$$

$$-g_O^B(k) = g_O^A(k) \propto \frac{\omega^{\frac{3}{2}}(k)}{\sqrt{N}} \sin\left(k\frac{x_{AB}}{2}\right), \qquad (4)$$

with $x_{AB} = n_{AB}\Delta x$ being the distance between the qubits.

Here the justification for the terms 'even' and 'odd parity' becomes clear, as even modes couple with the same sign to the qubits, while odd modes couple with opposite signs to the two qubits. The coupling strengths depend periodically on the product of k and $x_{AB}$. In Fig. 1-2(a), the solid line is a cosine and the dashed line is a sine mode with the origin being in the middle of the qubits. This clarifies the signs in Eqs. (3,4), as $Q_A$ is connected to the cell number $n_{AB}/2$, and $Q_B$ to - $n_{AB}/2$.

Figure 1-2(b) shows the oscillatory nature of the g-couplings at different mode frequencies. For better visualization of the oscillations, we consider a ring with N = 240 unit cells, but keep the qubit-qubit cell separation at $\Delta n$ = 6. Since the cosine and sine functions do not depend on N, this does not affect the oscillatory nature of the coupling strength. In the figure, we compare the analytical expressions of Eqs. (3,4) with the numerical simulations that predict the same odd and even parity behavior. An important remark about the importance of the g-coupling parity is that its sign can be crucially important for the calculation of the effective J-coupling between the qubits, discussed below.

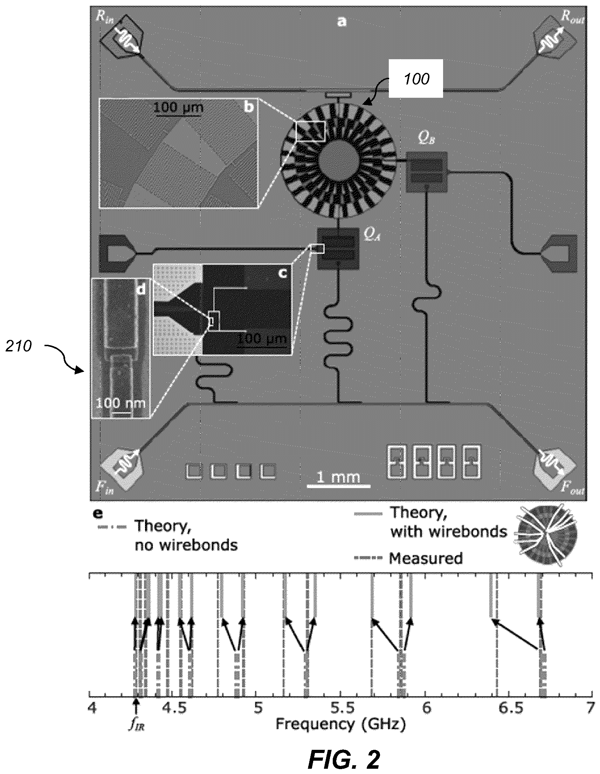

FIG. 2 depicts 24-cell left-handed superconducting metamaterial ring-resonator 100, showing: (a) Chip layout for metamaterial ring-resonator device, (b, c) Optical micrographs of device. (d) SEM image 210 of Josephson junction in qubit. The device has two flux-tunable transmon qubits, QA and QB, coupled to a ring resonator at the positions indicated. $R_{in}/R_{out}$ connections to upper feed-line used to probe ring resonator modes. $F_{in}/F_{out}$ connections used for measuring readout resonators coupled to each qubit. (e) Measured ring resonator frequencies are shown in dashed lines. Shown in dashed-dotted lines are theoretical mode frequencies when stray inductance due to wirebonds is not included. Solid lines show large degeneracy lifting effect of wirebonds on the ring resonator mode frequencies.

Device Layout: The device consists of a 24-cell, left-handed superconducting metamaterial ring-resonator comprised of inter-digitated capacitors with double-sided meander-line inductors to ground (Fig. 2). The ring resonator is capacitively coupled to a feedline $(R_{in}/R_{Out})$ [Fig. 2(a)] for probing ring-resonator modes. Two flux-tunable floating-style asymmetric transmon qubits, QA and QB, are capacitively coupled to the ring resonator at 90 and 180 degrees from the feedline coupling point, respectively. Both qubits have readout resonators inductively coupled to a separate feedline ($F_{in}/F_{Out}$), as well as separate on-chip flux-bias lines for tuning the transition frequency.

Figure 2(e) shows the location of aluminum wirebonds used to connect the central superconducting disk inside the ring resonator to the ground plane of the chip. These ground bonds have non-negligible inductance $L_W$ which we estimate to be 1 nH/mm. The bonds and are not spaced symmetrically due to the adjacent locations of the qubits and feedline. These wirebonds break the symmetry of the clockwise and counterclockwise propagating waves and lift the degeneracy of the even and odd ring-resonator modes. Figure 2(e) shows the ring resonator has an infrared cutoff frequency of 4.287 GHz, below which we observe no modes. Between 4-6.5 GHz, we measure thirteen modes to which the qubits may couple. As expected these modes come in pairs that have their degeneracy broken due to the presence of the qubits, the feedline, and the wirebonds. The size of the degeneracy lifting ranges from ~30 MHz near the IR mode to ~250 MHz at higher frequencies and is in good agreement with a theoretical simulation with wirebonds, as shown in Fig. 2(e). The same simulation without wirebonds fails to reproduce the observed lifting of degeneracies.

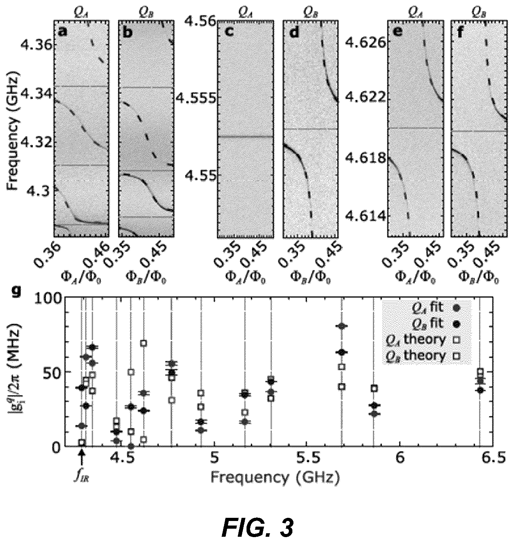

FIG. 3 depicts the mode structure of the resonator, and shows: (a), (b) Observed vacuum Rabi splittings, measured via $R_{in}/R_{out}$, between three ring resonator modes and QA and QB, respectively. Dashed lines show fits to splitting data obtained from reduced Hamiltonian including one qubit and the three modes. Horizontal lines show dressed mode frequencies. (c), (d), (e), (f) Splittings and fits for single modes for each qubit. For all measurements, the spectator qubit is fixed at its upper flux insensitive sweet spot ($\Phi_x/\Phi0$ = 0). As shown in (c),

QA has effectively zero coupling to the ring resonator mode at 4.553 GHz, while (d) shows QB has a coupling strength of 26.6 MHz (g) Extracted and theoretical $|g_i{}^q|/2\pi$ values (where $q = A$ or $q = B$) for each ring-resonator mode from the IR-cutoff to 6.5 GHz, shown as circles and squares, respectively. Error bars on experimental data obtained computed from 95% confidence intervals in g-coupling fits. Vertical dashed lines show bare ring resonator mode frequencies.

Mode structure and g-coupling: To characterize the coupling strength between each qubit and the different ring resonator modes, we probe the modes by measuring the microwave transmission through the ring resonator feedline ($R_{in}/R_{Out}$) while scanning the flux for one of the qubits with the other qubit flux-biased at its upper flux-insensitive sweetspot. We perform these measurements for each of the thirteen modes between 4-6.5 GHz, and we observe vacuum Rabi splittings when each qubit hybridizes with the ring-resonator mode photonic state. A selection of these measurements for $Q_A$ and $Q_B$ is shown in Fig. 3[a-f]. To extract the magnitude of the $g_i{}^A$ ($g_i{}^B$) coupling for $Q_A(Q_B)$, we perform a least-squares minimization to fit the splitting data to a reduced Hamiltonian for the ring-resonator mode-qubit system, shown as dashed lines. In regions where the mode spacing and coupling were comparable, we simultaneously fit multiple modes to extract each $g_i{}^A$ and $g_i{}^B$, as shown in Fig. 3(a,b) for Q$A$ and Q$B$, respectively. Near $f_{IR}$, the mode spacing is 23 MHz between the IR-cutoff mode and next mode, while $g_i{}^A/2\pi$ is 13 MHz and $g_i{}^B/2\pi$ 36.5 MHz for the IR-cutoff mode, respectively. For Q$_A$, one ring-resonator mode near 4.55 GHz shown in Fig. 3(c) has effectively zero coupling, while for Q$_B$, the extracted magnitude of $g_i{}^B/2\pi$ to this same mode is 26.6 MHz, shown in Fig. 3(d). While theory predicts zero-coupling to the modes at the roots of Eqs. (3) and (4), this mode is not a root. In the simple model without feedline and wirebonds this mode has a non-zero coupling strength to Q$_A$ and only in the more complex model does this mode result in a negligible coupling strength.

Experimental and theoretical values for $g_i{}^A(g_i{}^B)$ for Q$_A$(Q$_B$) and ring-resonator modes from 4 GHz to 6.5 GHz are shown in Fig. 3(g). Theoretical calculations include a model of the feedline and the wirebonds, the introduction of which requires the use of numerical calculations instead of the analytical expressions (3) and (4). Despite the added complexity we can still observe features of the sine and cosine behavior of $g_i{}^{A/B}$. For example we find a pair of modes at 4.344 GHz and 4.475 GHz. The former having a large coupling strength, since it is an odd mode and equation (4) has a maximum here, while the latter is even and has negligible coupling following equation (3).

We observe a broad array of coupling magnitudes ranging from 0-80 MHz. We cannot directly measure the sign of g, but the magnitude and parity of the pairs of $g_i{}^A(g_i{}^B)$ for Q$_A$(Q$_B$) to each mode impacts qubit-qubit interactions that are mediated by the ring resonator.

We utilize these extracted g-couplings for each of the modes below.

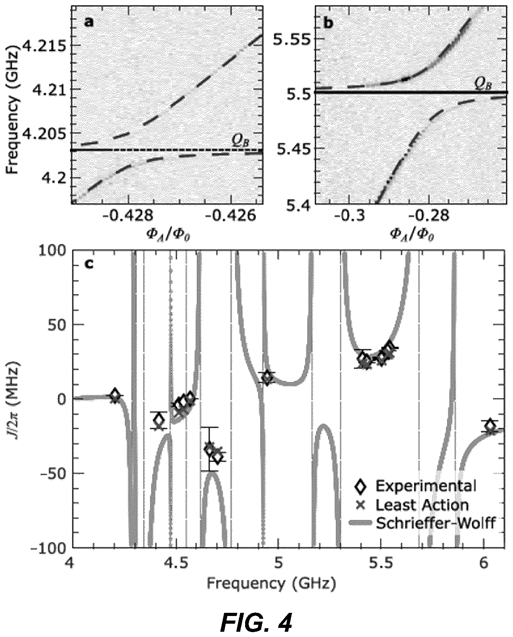

J-coupling between qubits: We next explore the transverse exchange coupling between the qubits mediated by virtual photon exchange with the various ring-resonator modes. By using the qubit readout resonators to perform conventional qubit spectroscopy and the local flux-biasing capability to independently tune the qubits, we fix the frequency of one qubit, say Q$B$, while flux-tuning the other qubit (QA). A nonzero J-coupling between the qubits results in an anti-crossing in the spectrum when the bare qubit frequencies cross. We can adjust the frequency of the crossing point for the bare qubit frequencies relative to the ring-resonator modes and study the variation of the exchange coupling between the qubits (Fig. 4). To extract the magnitude of J, we fit the spectroscopy data with a reduced Hamiltonian model in which the qubits are restricted to two-states and only the nearest ring-resonator modes are accounted for. In the example spectroscopy measurements in Fig. 4, we observe a small exchange coupling of 2.1 MHz when the qubits are biased below $f_{IR}$ [Fig. 4(a)], while the J-coupling is more than an order of magnitude larger when the qubits are biased in the dense portion of the ring-resonator mode spectrum [Fig. 4(b)]. Figure 4(c) shows theoretical predictions for J compared to extracted values for a range of qubit frequencies. In the perturbative Schrieffer-Wolff approximation, J is given by a sum over all modes

$$J = \frac{1}{2} \sum_i g_i^A g_i^B \left( \frac{1}{\Delta_i^A} + \frac{1}{\Delta_i^B} \right)$$

where $\Delta^A{}_i$ and $\Delta^B{}_i$ give the detuning for QA and QB to each ring resonator mode i. Since J depends on the product $g_i{}^A g_i{}^B$, even modes will have a positive contribution to the sum and odd modes will have a negative one, however this can be changed by the sign of the detuning. Although our spectroscopy measurements only provide the magnitude of J, we have used the perturbative theoretical calculations with different possible parities of $g_i{}^A$ and $g_i{}^B$ for each mode i to determine the sign of each qubit-mode coupling that provides the best agreement with the exchange coupling measurements. From the experimentally measured J values and the close agreement with the theoretical modeling, it is clear that the exchange coupling can vary in magnitude between zero and 41 MHz and can change sign depending on the detuning between the qubits and the various ring resonator modes. Since the mode spectrum is dense and interactions to modes may be strong, perturbation theory is not guaranteed to be a good choice. Therefore we also compare our results to the non-perturbative method at selected frequencies. This method agrees well with both experimental and perturbative data, except for cases where qubit and resonator frequency are very close, in which case the perturbative method diverges.

FIG. 4 depicts qubit spectroscopy, and shows: (a) and (b) show qubit spectroscopy for $QA$ as a function of frequency and flux when $QB$ is at a fixed frequency, denoted by a short dashed line. Long dashed lines show fit to data obtained via minimization of a reduced Hamiltonian. The diamonds and filled circles in (c) show experimental and theoretical $J$ coupling as a function of frequency. Error bars obtained computed from 95% confidence intervals in $J$-coupling fits. Dashed vertical lines show bare ring resonator mode frequencies.

ZZ-interactions: In general, interactions between pairs of qubits and resonator modes coupled to the qubits lead to $ZZ$ interactions between the qubits, where the state of one qubit shifts the transition frequency of the other qubit. Such interactions can be problematic in multi-qubit systems when they are present and can generate unwanted and uncontrolled entanglement. Various approaches have been explored for reducing or nulling. On the other hand, the $ZZ$ interactions can also be used for implementing two-qubit entangling gates, provided the interaction strength can be modulated in some way.

In the dense multi-mode spectrum of our metamaterial ring resonator system, we explore the $ZZ$ interaction between the two qubits for different detuning between the qubits for different regions of the mode spectrum. We use a standard Ramsey interferometry technique to extract the $ZZ$ interaction strength. We first bias $QB$ to a particular transition frequency, then we adjust the bias of $QA$ to various frequencies relative to $QB$ and the mode spectrum. At each bias point for $QA$, we perform a standard Ramsey fringe sequence while stepping through the drive frequency for the X/2 pulses for $QA$, thus allowing us to identify the transition frequency for $QA$. We then perform a second Ramsey fringe measurement of $QA$, but now with each Ramsey sequence preceded by an $X$ pulse on $QB$. The difference in the transition frequency for $QA$ between the two Ramsey fringe sequences corresponds to the $ZZ$ interaction.

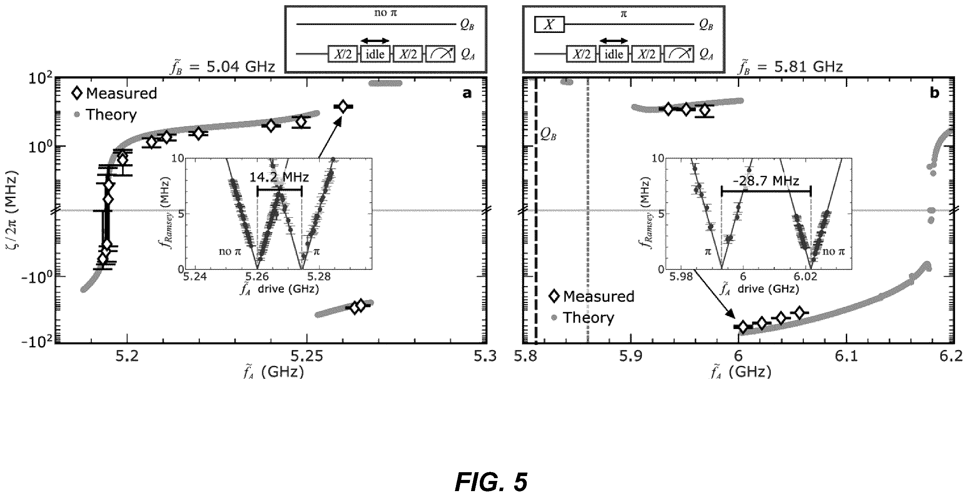

FIG. 5 depicts ZZ measurements, showing: (a) and (b) ZZ as a function of $QA$ frequency when the frequency of $QB$ ($fB$) is held at two fixed values, 5.04 GHz and 5.81 GHz, respectively. Measured and theoretical values are shown as triangles and circles respectively. Vertical dashed and dotted lines respectively show the location of $QB$ and the ring resonator modes in frequency space. Insets to (a) and (b) Ramsey oscillation frequency fit data as a function of $Q_A$ frequency taken from Ramsey fringe measurements. Solid fit lines, where oscillation frequencies are zero, show $Q_A$ frequency. Right data points and fit line generated by performing a simple Ramsey pulse sequence on $Q_A$ at multiple detunings and finding oscillation frequency. Data generated from pulse sequence (shown in closed circles) in which a $\pi$-pulse is applied to $Q_B$, followed by a Ramsey on $Q_A$. Error bars computed from 95% confidence intervals for both Ramsey and ZZ fits.

In Fig. 5(a,b), we show two series of ZZ measurements as a function of the transition frequency for $Q_A$

for two different bias point of $Q_B$. We observe that the ZZ interaction can vary over a wide frequency range, covering both positive and negative values, and crossing through zero, both smoothly in some regions and discontinuously in others.

Theoretical data is calculated by diagonalizing the Hamiltonian and using the definition of ZZ interaction $\zeta = E00 + E11 - E10 - E01$. If two states come into resonance with each other this definition can be non-trivial, as the identification of which state is for example the |11⟩ state and which is a non-computational state e.g. |20⟩ becomes more difficult.

Comparing experimental results to theoretical calculations of ZZ, we get excellent agreement. These measurements demonstrate the variability of the parameter space. For a very small change in the frequency of $QA$, we can see a large shift in the ZZ interaction between the two qubits.

**Claims**

**1.** A quantum device comprising:

a plurality of qubits including at least a first qubit and a second qubit; and
a ring resonator with left-handed wave dispersion;
wherein the plurality of qubits is positioned around the ring resonator; and
wherein the ring resonator is coupled to the first and second qubits.

**2.** The quantum device of claim 1, wherein the plurality of qubits includes at least a third qubit, and the ring resonator is alternately coupled to a first pair of the plurality of qubits comprising the first and second qubits and a second pair of the plurality of qubits comprising the first and third qubits, wherein the first pair of qubits comprise nearest neighbors and the second pair qubits comprise non-nearest neighbors.

**3.** The quantum device of claim 2, wherein the quantum device enables a two-qubit entangling gate such that the two-qubit entangling gate that is selectable to alternately entangle the first and second qubits when the ring resonator is coupled to the first pair of qubits without affecting the third qubit and entangle the first and third qubits when the ring resonator is coupled to the second pair of qubits without affecting the second qubit.

**4.** The quantum device of claim 1, wherein the plurality of qubits are evenly spaced about the ring resonator.

**5.** The quantum device of claim 1, wherein the plurality of qubits are not evenly spaced about the ring resonator.

**6.** The quantum device of claim 1, wherein the plurality of qubits are transmon qubits.

**7.** The quantum device of claim 1, wherein the first and second qubits are coupled at different points around the ring resonator.

**8.** The quantum device of claim 1, wherein the ring resonator comprises a spectrum of modes in the vicinity of transition frequencies of the first and second qubits.

**9.** The quantum device of claim 1, wherein the ring resonator comprises a dense multi-mode spectrum near the qubit frequencies, facilitating variations in interaction strengths between the qubits.

**10.** The quantum device of claim 1, wherein the frequency of the first qubit is fixed and the frequency of the second qubit is tuned.

**11.** The quantum device of claim 1, wherein the coupling between the first and second qubits may be turned on or off by tuning the ZZ-interaction.

**13.** The quantum device of claim 1, wherein the ring resonator comprises a plurality of unit cells arranged in a ring, and the first qubit and the second qubit are coupled at different points on the ring separated by at least one unit cell.

**14.** The quantum device of claim 1, wherein the ring resonator comprises a superconducting metamaterial.

**15.** The quantum device of claim 1, wherein the first and second qubits each have an individual g-coupling energy to each of the ring resonator modes.

**16.** A method of providing a two-qubit entangling gate, the method comprising the steps of:

providing a ring resonator with left-handed wave dispersion
coupling a plurality of qubits to the ring resonator, the plurality of qubits comprising a first qubit and a second qubit.

**17.** The method of claim 16, further comprising coupling the first and second qubits at different points around the ring resonator.

**18.** The method of claim 16, further comprising coupling a third qubit to the ring resonator, and alternately coupling to a first pair of the plurality of qubits comprising the first and second qubits and a second pair of the plurality of qubits comprising the first and third qubits, wherein the first pair of qubits comprise nearest neighbors and the second pair qubits comprise non-nearest neighbors.

**19.** The method of claim 16, wherein the quantum device enables a two-qubit entangling gate, and the method further comprises alternatively entangling the first and second qubits when the ring resonator is coupled to the first pair of qubits without affecting the third qubit and the first and third qubits when the ring resonator is coupled to the second pair of qubits without affecting the second qubit.

**20.** The method of claim 16, wherein the ring resonator comprises a spectrum of modes in the vicinity of transition frequencies of the first and second qubits.

FIG. 1-1

FIG. 1-2

**FIG. 2**

**FIG. 3**

*FIG. 4*

*FIG. 5*

Europäisches
Patentamt

European
Patent Office

Office européen
des brevets

# EUROPEAN SEARCH REPORT

**Application Number**

EP 24 18 9835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCBROOM TIANNA A: "APS -2023 APS March Meeting - Event - Multimode entangling interactions between transmons coupled through a metamaterial ring-resonator: experiment", , 6 March 2023 (2023-03-06), XP093226959, Retrieved from the Internet: URL:https://meetings.aps.org/Meeting/MAR23/Session/A73.7> * the whole document * | 1-19 | INV. G06N10/40 |
| Y | INDRAJEET S ET AL: "Coupling a Superconducting Qubit to a Left-Handed Metamaterial Resonator", ARXIV.ORG, CORNELL UNIVERSITY LIBRARY, 201 OLIN LIBRARY CORNELL UNIVERSITY ITHACA, NY 14853, 11 December 2020 (2020-12-11), XP081835227, DOI: 10.1103/PHYSREVAPPLIED.14.064033 * abstract * * Section III * | 1-19 | |

-/--

**TECHNICAL FIELDS SEARCHED (IPC)**

G06N

The present search report has been drawn up for all claims

| Place of search | Date of completion of the search | Examiner |
|---|---|---|
| The Hague | 3 December 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 18 9835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HAZRA SUMERU ET AL: "Ring-Resonator-Based Coupling Architecture for Enhanced Connectivity in a Superconducting Multiqubit Network", PHYSICAL REVIEW APPLIED, vol. 16, no. 2, 11 August 2021 (2021-08-11), XP055917638, DOI: 10.1103/PhysRevApplied.16.024018 Retrieved from the Internet: URL:https://journals.aps.org/prapplied/pdf /10.1103/PhysRevApplied.16.024018?casa_tok en=qLdTrONIfXwAAAAA:4X93YZHxCA8oE7Zb6teu9q 4Rs6e4rfAbBn8ptciJ8AXNq_b9aV9AMfYvRkk2OT1W pqfoF-pLioTOJg> * abstract * * figure 1 * | 1-19 | |
| A | KU JASEUNG ET AL: "Suppression of Unwanted ZZ Interactions in a Hybrid Two-Qubit System", ARXIV.ORG, 9 April 2020 (2020-04-09), pages 1-21, XP055849306, DOI: 10.1103/PhysRevLett.125.200504 Retrieved from the Internet: URL:https://arxiv.org/pdf/2003.02775.pdf> * abstract * | 1-19 | TECHNICAL FIELDS SEARCHED (IPC) |

The present search report has been drawn up for all claims

| Place of search | Date of completion of the search | Examiner |
|---|---|---|
| The Hague | 3 December 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)